(19) Europäisches Patentamt
European Patent Office
Office européen des brevets

(11) **EP 3 447 318 A1**

(12) **EUROPÄISCHE PATENTANMELDUNG**

(43) Veröffentlichungstag:
**27.02.2019  Patentblatt 2019/09**

(51) Int Cl.:
*F16C 17/24* (2006.01)  *G01P 3/44* (2006.01)
*G01M 13/02* (2019.01)  *G01M 13/04* (2019.01)
*G01B 7/14* (2006.01)  *G01D 5/14* (2006.01)
*G01B 7/30* (2006.01)

(21) Anmeldenummer: **18187527.9**

(22) Anmeldetag: **06.08.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **23.08.2017   DE 102017119305**

(71) Anmelder: **Rolls-Royce Deutschland Ltd & Co KG
15827 Blankenfelde-Mahlow (DE)**

(72) Erfinder: **LÜCK, Rudolf
15827 Blankenfelde-Mahlow (DE)**

(74) Vertreter: **Maikowski & Ninnemann
Patentanwälte Partnerschaft mbB
Postfach 15 09 20
10671 Berlin (DE)**

(54) **VORRICHTUNG UND VERFAHREN ZUR ÜBERWACHUNG EINER VORRICHTUNG MIT EINER GLEITLAGERVORRICHTUNG**

(57)    Die Erfindung betrifft eine Vorrichtung zur Überwachung einer Vorrichtung mit mindestens einer Gleitlagervorrichtung (10) mit mindestens einem statischen Element (1, 30, 32, 35) für mindestens ein relativ zum mindestens einen statischen Element (1, 30, 32, 35) rotatorisch beweglichen Element (2, 31, 32), dadurch gekennzeichnet, dass das mindestens eine bewegliche Element (2, 31, 32) mindestens eine Vorrichtung (3) zur Generierung eines Magnetfeldes (M) aufweist und das mindestens eine statische Element (1, 30, 32, 35) mindestens eine Sensorvorrichtung (11) für die Erfassung des Magnetfeldes (M), insbesondere eines zeitlich veränderlichen Magnetfeldes (M), aufweist, wobei von der Sensorvorrichtung (11) insbesondere berührungslos erfasste Daten des Magnetfelds (M) im Betrieb der mindestens einen Vorrichtung an eine Datenverarbeitungsvorrichtung (20) übertragbar sind und mit der Datenverarbeitungsvorrichtung (20) in Abhängigkeit der erfassten Daten mindestens eine Maßzahl für eine räumliche Anordnung des mindestens einen statischen Elements (1, 30, 32, 35) relativ zu dem mindestens einen beweglichen Element (2, 31, 32) bestimmbar ist. Die Erfindung betrifft auch ein Verfahren zur Überwachung mindestens einer Vorrichtung mit mindestens einer Gleitlagervorrichtung.

Fig. 1

EP 3 447 318 A1

**Beschreibung**

Die Erfindung betrifft eine Vorrichtung zur Überwachung einer Vorrichtung mit einer Gleitlagervorrichtung mit den Merkmalen des Anspruchs 1 und ein Verfahren zur Überwachung einer Vorrichtung mit einer Gleitlagervorrichtung mit den Merkmalen des Anspruchs 12.

Gleitlager dienen dazu, zueinander bewegliche Elemente möglichst genau, reibungsarm und verschleißfrei zu führen und / oder zu lagern. Dabei können die Gleitlager als statisch oder dynamisch belastete Axial- oder Radiallager ausgeführt werden. Auch können die Gleitlager geteilt oder ungeteilt ausgeführt werden, wobei eine geteilte Ausführung den Einbau des Gleitlagers in eine Vorrichtung erleichtern kann.

Gleitlager finden breite Verwendung, z.B. in Verbrennungsmaschinen (z.B. Kurbelwellen-, Pleuel-, Kolbenbolzen- oder Nockenwellenlager), in Verdichtern, Pumpen, Getrieben, Turbinen oder Generatoren. Auch in Flugzeugtriebwerken finden Gleitlager Anwendung, hier z.B. in Planetengetrieben, die zwischen eine antreibende Turbinensektion (z.B. eine Niederdruckturbine) und einen Fan geschaltet sind. Die Planetenräder in diesen Planetengetrieben sind z.B. mittels Gleitlagern gelagert. Planetengetriebe sind dabei eine besondere Ausgestaltung von Umlaufgetrieben, d.h. Getrieben, bei denen neben gestellfesten Wellen auch Achsen vorhanden sind, die auf Kreisbahnen im Gestell umlaufen.

Dabei ist es für den Betrieb der Vorrichtung von Interesse, jeweils die aktuell räumliche Anordnung des statischen Elements (z.B. einer Welle für ein Planetenrad) relativ zu dem beweglichen Element (z.B. dem Planetenrad) zu bestimmen. Auch ist es von Interesse, die räumliche Anordnung einer beweglichen Welle relativ zu einem statischen Gleitlager zu bestimmen.

Die räumliche Anordnung umfasst dabei z.B. das Spaltmaß, d.h. den Spalt zwischen Gleitlager und dem gelagerten Teil. Die aktuelle Kenntnis des Spaltmaßes kann zur Erkennung des Verschleißzustandes oder eines irregulären Betriebszustandes verwendet werden.

Ein anderer Parameter der räumlichen Anordnung von einem statischen und einem relativ dazu beweglichen Element ist die radiale und / oder axiale Ausrichtung der Achse, z.B. eine Neigung der Wellenachse gegenüber der Achse des Gleitlagers (z.B. Verkantung). Auch die Drehzahl und / oder die Drehrichtung erlauben Aussagen über die relative räumliche Anordnung der Elemente zueinander. Zur räumlichen Anordnung gehören z.B. auch die relativen Positionen von Planetenrädern z.B. relativ zu einem Carrier oder einem Gehäuse.

Diese aktuellen räumlichen Anordnungen (d.h. im Betrieb gemessene Werte) können einzeln oder im Zusammenhang zur Überwachung der Betriebssicherheit verwendet werden.

Es besteht daher die Aufgabe, Vorrichtungen und Verfahren zu schaffen, die Vorrichtungen mit Gleitlagervorrichtungen überwachen.

Die Vorrichtung gemäß Anspruch 1 befasst sich mit dieser Aufgabe.

Dabei weist das mindestens eine bewegliche Element mindestens eine Vorrichtung zur Generierung eines Magnetfeldes auf. Das mindestens eine statische Element weist mindestens eine Sensorvorrichtung für die Erfassung des Magnetfeldes, insbesondere eines zeitlich veränderlichen Magnetfeldes, auf.

Die von der Sensorvorrichtung insbesondere berührungslos erfassten Daten des Magnetfelds (z.B. in der Form von induzierten Spannungssignalen U(t)) sind im Betrieb der mindestens einen Vorrichtung an eine Datenverarbeitungsvorrichtung übertragbar.

Mit der Datenverarbeitungsvorrichtung ist in Abhängigkeit der erfassten Daten mindestens eine Maßzahl für eine räumliche Anordnung des mindestens einen statischen Elements relativ zu dem mindestens einen beweglichen Element bestimmbar.

Der Begriff der räumlichen Anordnung ist hier nicht nur statisch, sondern auch dynamisch zu verstehen. So kann in einer Ausführungsform die räumliche Anordnung zwischen dem mindestens einen statischen Element und dem mindestens einen beweglichen Element durch ein Spaltmaß zwischen dem mindestens einen statischen Element und dem mindestens einen beweglichen Element charakterisiert sein. Dies ist z.B. eine Größe, die im Betrieb von Gleitlagern von Interesse ist.

Zusätzlich oder alternativ kann ein Maß für die Ausrichtung, insbesondere die axiale Ausrichtung, die radiale Ausrichtung und / oder die Orientierung zwischen dem mindestens einen statischen Element und dem mindestens einen beweglichen Element, eine Phasenlage, eine Drehrichtung des mindestens einen beweglichen Elements und / oder die Drehzahl des mindestens einen beweglichen Elements verwendet werden. Die Phasenlage kann z.B. im Zusammenhang mit der Anwendung in einem Planetengetriebe von Nutzen sein. Bei einer Verformung der Zähne wird anhand des empfangenen Signals eine Veränderung der Phasenlage zu beobachten sein.

In einer weiteren Ausführungsform kann die Vorrichtung zur Generierung eines Magnetfeldes mindestens ein Magnetelement aufweisen, insbesondere mindestens ein im mindestens einen beweglichen Element eingelagertes Magnetelement, einen in das bewegliche Element extern eingebrachten magnetisierten Bereich, mindestens eine im mindestens einen beweglichen Element eingelagerte Spule und / oder mindestens einen im mindestens einen beweglichen Element eingelagerten Permanentmagneten oder einen magnetischen Bereich. Alle diese Mittel erzeugen ein Magnetfeld, das dann von der Sensorvorrichtung detektiert werden kann.

In einer Ausführungsform weist die Vorrichtung zur Generierung des Magnetfelds zur Unterscheidung der Drehrichtung des beweglichen Elements und / oder zur Individualisierung des mindestens einen beweglichen Elements eine kodierte Anordnung mit Magnetelement auf. Die Kodierung kann z.B. durch eine gezielte asymmetrische Anordnung oder Abfolge von Magnetelementen oder magnetischen Bereichen bestehen. Eine solche Kodierung kann z.B. auch in Form einer dünnen Schicht bestehen, die unterschiedlich magnetisierte Bereiche aufweist, wie dies z.B. von Festplatten oder Tonbandmaterial bekannt ist.

Damit Aussagen z.B. über die Ausrichtung der Wellenachse möglich sind, ist in einer Ausführungsform die mindestens eine Vorrichtung zur Generierung eines Magnetfeldes mindestens teilweise über die axiale Breite der mindestens einen Gleitlagervorrichtung angeordnet.

In einer weiteren Ausführungsform weist die Sensorvorrichtung mindestens eine Spule zur Erfassung des Magnetfeldes, insbesondere des zeitlich veränderlichen Magnetfeldes, mindestens einen Hallsensor, einen magnetischen Lesekopf und / oder mindestens einen magnetoresistiven Sensor auf.

Auch ist es mit einer Ausführungsform möglich, dass die Datenverarbeitungsvorrichtung den Amplitudenverlauf des zeitlich veränderlichen Magnetfeldes bestimmt. Dies kann z.B. durch die Auswertung des durch das Magnetfeld induzierten Spannungssignals U(t) erfolgen.

Ein mögliches Einsatzgebiet von Ausführungsformen sind Planetengetriebe, bei denen das mindestens eine statische Element ein Carrier (d.h. ein Planetenradhalter) in dem Planetengetriebe ist und die mindestens eine Sensorvorrichtung am Carrier angeordnet ist. Damit können die räumlichen Anordnungen der Planetenräder relativ zu dem Carrier erfasst werden. Dabei kann insbesondere die mindestens eine Vorrichtung zur Generierung eines Magnetfeldes an mindestens einem Planetenrad des Planetengetriebes angeordnet sein, so dass eine Bewegung des mindestens einen Planetenrades relativ zum Carrier durch die mindestens eine Sensorvorrichtung am Carrier erfassbar ist.

Auch ist es möglich, dass das mindestens eine statische Element ein Gehäuse des Planetengetriebes ist oder an diesem angeordnet ist und der Carrier das relativ zum Gehäuse bewegliche Element ist, so dass eine Relativbewegung des Carriers zum Gehäuse durch die mindestens eine Sensorvorrichtung erfassbar ist. Damit kann z.B. die räumliche Anordnung des Carriers mit den im Hohlrad umlaufenden Planetenrädern erfasst werden.

Diese Vorrichtungen sind in einer Turbomaschine, insbesondere einem Flugzeugtriebwerk, verwendbar.

Auch ein Verfahren mit den Merkmalen des Anspruchs 12 befasst sich mit der Aufgabe.

Dabei generiert das mindestens eine bewegliche Element ein Magnetfeld mittels mindestens einer Vorrichtung ab.

Das mindestens eine statische Element weist mindestens eine Sensorvorrichtung zur Erfassung des Magnetfelds, insbesondere eines zeitlich veränderlichen Magnetfeldes, auf.

Die mit der mindestens einen Sensorvorrichtung gewonnenen Daten, insbesondere berührungslos erfasste Daten des Magnetfelds der Vorrichtung, werden an eine Datenverarbeitungsvorrichtung übertragen und die Datenverarbeitungsvorrichtung bestimmt in Abhängigkeit der erfassten Daten mindestens eine Maßzahl für eine räumliche Anordnung des mindestens einen statischen Elements relativ zu dem mindestens einen beweglichen Element.

In Zusammenhang mit den in den Figuren dargestellten Ausführungsbeispielen wird die Erfindung erläutert. Dabei zeigt

Fig. 1 eine schematische Schnittansicht durch eine Ausführungsform einer Vorrichtung mit einer Gleitlagervorrichtung zur Lagerung einer Welle;

Fig. 1A eine Prinzipskizze zur Erläuterung der Amplitude;

Fig. 1B eine schematische Schnittansicht durch eine Alterantivbauform zu der der Ausführungsform gemäß Fig. 1;

Fig. 2 eine schematische Schnittansicht einer Variation der Ausführungsform gemäß Fig. 1;

Fig. 3 eine schematische Ansicht einer Welle mit zwei axial verteilten Gruppen von Vorrichtungen zur Erzeugung eines Magnetfeldes;

Fig. 4 eine schematische Ansicht eines Planetengetriebes mit einer Ausführungsform zur Überwachung einer Vorrichtung mit Gleitlagervorrichtungen;

Fig. 5 eine schematische Ansicht eines Planetengetriebes mit einer weiteren Ausführungsform einer Vorrichtung zur Überwachung einer Vorrichtung mit Gleitlagervorrichtungen;

Fig. 6 eine schematische Seitenansicht eines Planetengetriebes mit einer weiteren Ausführungsform einer Vorrichtung zur Überwachung einer Vorrichtung mit Gleitlagervorrichtungen.

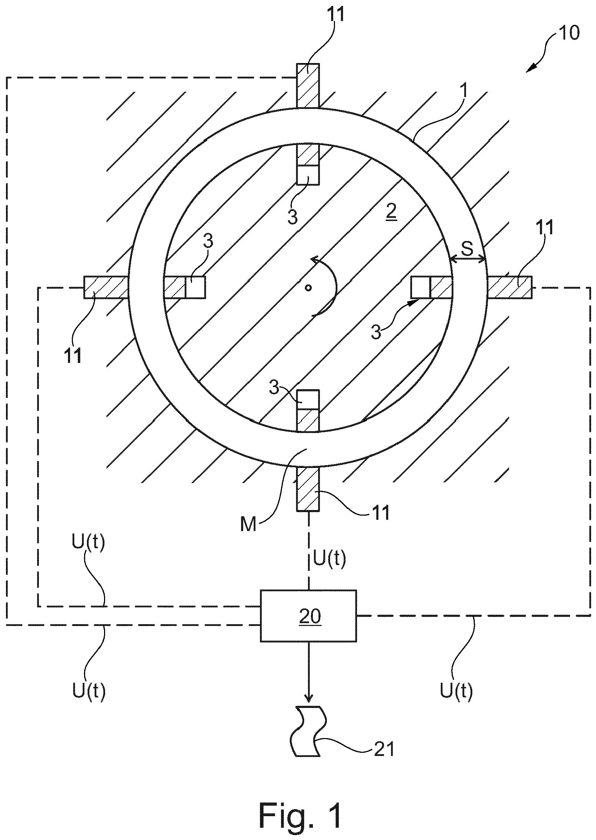

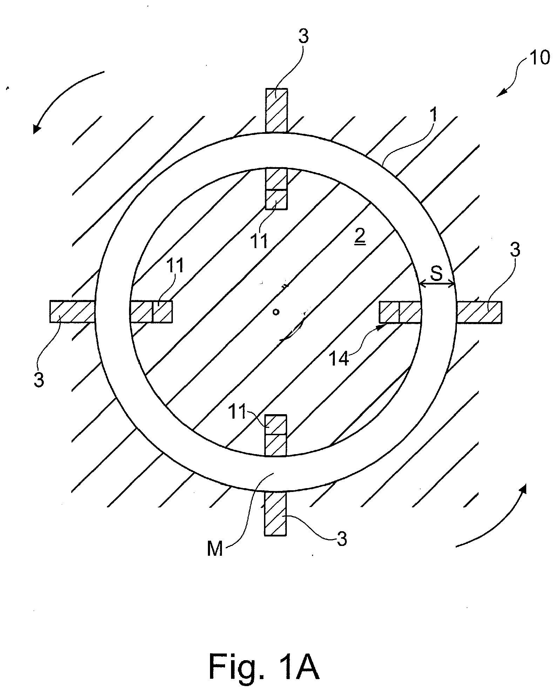

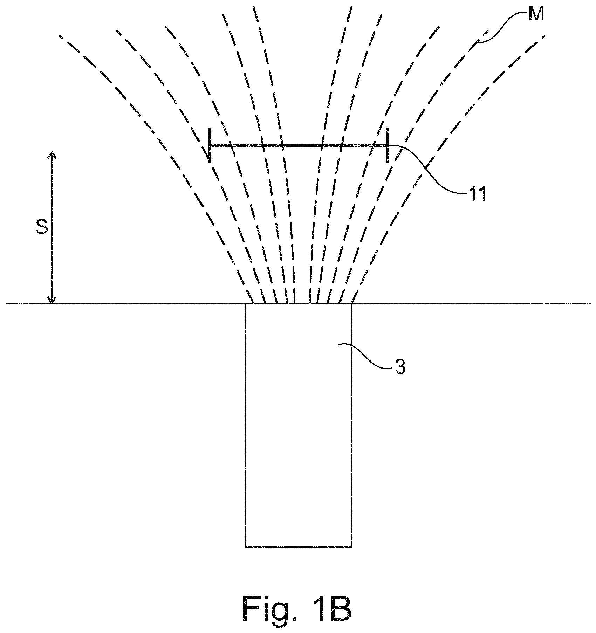

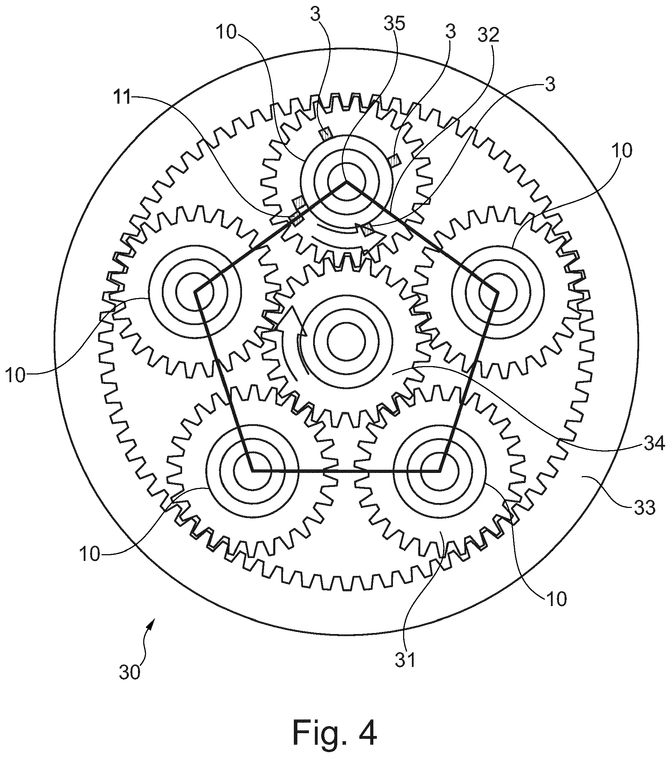

In Fig. 1 ist eine Ausführungsform einer Vorrichtung mit einer Gleitlagervorrichtung 10 dargestellt. Grundsätzlich können Vorrichtungen dieser Art z.B. in Planetengerieben verwendet werden, was in der Folge in den Fig. 4, 5 und 6 noch dargestellt werden wird.

Die Gleitlagervorrichtung 10 weist ein statisches Element 1, hier die Gleitlagerschale, auf. In diesem Gleitlager 1 ist drehbar eine Welle 2 als bewegliches Element angeordnet. Somit ist die Welle 2 relativ zum Gleitlager 1 beweglich.

Fig. 1 soll hier lediglich eine mögliche Konfiguration der Elemente 1, 2 darstellen.

Zwischen dem Gleitlager 1 und der Welle 2 ist der Gleitlagerspalt mit dem Spaltmaß S dargestellt, wobei das Spaltmaß S hier aus Gründen der Übersichtlichkeit unverhältnismäßig groß dargestellt ist.

In der Welle 2 sind hier am Umfang mehrere Vorrichtungen 3 zur Generierung von Magnetfeldern M (in Fig. 1 lediglich schematisch dargestellt) angeordnet. Diese Vorrichtungen 3 zur Generierung von Magnetfeldern M können z.B. in die Welle 2 eingelassene Permanentmagnete aufweisen. Auch können magnetisierte Bereiche der Vorrichtungen 3 zur Generierung von Magnetfeldern M durch eine externe Magnetisierung in die Welle 2 eingebracht werden. Grundsätzlich ist es auch möglich, dass die Vorrichtung 3 zur Generierung eines Magnetfeldes M elektromagnetische Elemente (z.B. Spulen) umfasst. Auch sind Kombinationen der magnetischen Mittel denkbar.

In der Ausführungsform gemäß Fig. 1 sind vier Magnetelemente der Vorrichtungen 3 zur Generierung eines Magnetfeldes M äquidistant am Umfang der Welle 2 angeordnet.

Im Ergebnis strahlen die Vorrichtungen 3 Magnetfelder M ab, die von externen Sensorvorrichtungen 11 erfassbar sind.

In der dargestellten Ausführungsform sind vier Sensorvorrichtungen 11 am Umfang des Gleitlagers 1 angeordnet, wobei die Sensorvorrichtungen 11 in der dargestellten Ausführungsform Spulen aufweisen. In anderen Ausführungsformen können auch andere Magnetfeldsensoren, z.B. Hallsensoren oder magnetoresistive Sensoren verwendet werden. Dabei können diese Sensoren grundsätzlich berührungslos arbeiten, so dass sie verschleißfrei und zuverlässig arbeiten können.

Wenn sich die Welle 2 in dem Gleitlager 1 dreht, wird durch die generierten Magnetfelder M jeweils eine Spannung U(t) induziert.

Bei der Verwendung einer Spule in der Sensorvorrichtung 11 gilt für die induzierte Spannung U(t)

$$U(t) = -N \, \frac{d(A(t)B(t))}{dt}$$

mit der Windungszahl N, der Querschnittsfläche der Spule A(t) (d.h. der möglicherweise zeitlich veränderlichen Querschnittsfläche) und der magnetischen Flussdichte B (auch magnetische Induktion genannt). Die magnetische Flussdichte B kann dabei zeitlich konstant sein, zeitlich veränderlich sein und / oder über den Abstand (z.B. das Spaltmaß) veränderlich sein.

Durch die Drehbewegung der Welle 2 wird in den Sensorvorrichtungen 11 jeweils die induzierte Spannung U(t) registriert. Dabei treten auf Grund der Drehbewegung Amplituden im Spannungssignal U(t) auf.

Da die absoluten Lagen der Vorrichtungen 3 zur Generierung der Magnetfelder M und der Sensorvorrichtungen 11 bekannt sind, kann aus den Amplituden des Spannungssignals U(t) auf die räumliche Anordnung von Welle 2 und Gleitlager 1 relativ zueinander geschlossen werden. Insbesondere kann auf das Spaltmaß S (d.h. geschlossen werden. Auch kann auf die Drehzahl der Welle 2 geschlossen werden.

In der Fig. 1A ist schematisch eine Vorrichtung 3 zur Generierung eines Magnetfeldes M dargestellt. Die Vorrichtung 3 erzeugt hier ein divergentes Magnetfeld M, das nach außen abgestrahlt wird. Eine Sensorvorrichtung 11 wird - je nach Abstand von der Vorrichtung 3 zur Generierung des Magnetfeldes M eine Flussdichte B(t) messen. Bei einem größeren Abstand (d.h. einem größeren Spaltmaß S) wird die magnetische Flussdichte B(t) kleiner sein als bei einem kleineren Abstand (d.h. einem kleineren Spaltmaß S). Dadurch wird entsprechend der oben angegeben Differentialgleichung die Amplitude des Spannungssignals U(t) beeinflusst.

Die ermittelten Spannungsdaten werden an eine Datenverarbeitungsvorrichtung 20 übertragen und dort ggf. bearbeitet (z.B. gefiltert oder gemittelt). Die Datenverarbeitungsvorrichtung 20 kann einen Datensatz 21 erzeugen, der auf Grund der Spannungsdaten eine Maßzahl für die räumliche Anordnung des statischen Elements 1 (hier des Gleitlagers) relativ zu dem beweglichen Element 2 (hier der Welle) enthält.

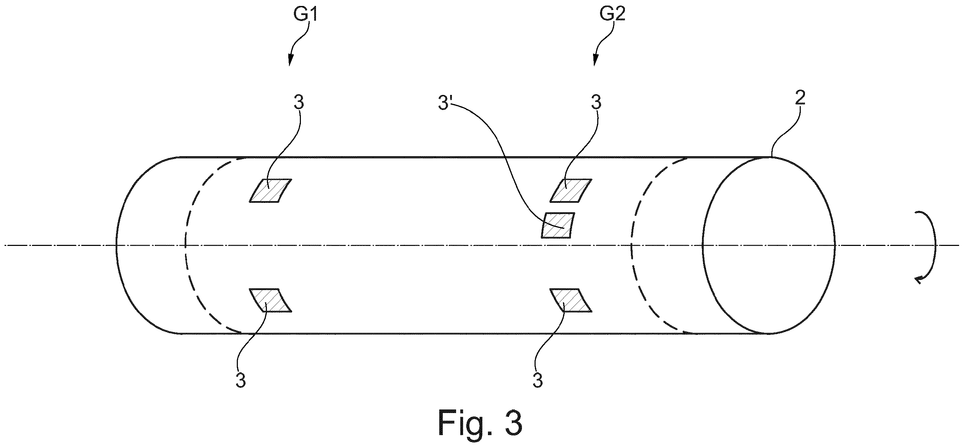

In der Ausführungsform gemäß Fig. 1 sind die Vorrichtungen 3 zur Erzeugung der Magnetfelder M symmetrisch am Umfang der Welle 2 verteilt. Grundsätzlich ist es auch möglich zwei, drei, fünf oder mehr solcher Vorrichtungen 3 symmetrisch am Umfang anzuordnen. Auch Ausführungsformen mit asymmetrischen Anordnungen sind zur Kodierung möglich, was z.B. im Zusammenhang mit der Fig. 3 beschrieben wird.

Es ist auch grundsätzlich eine Vorrichtung 3 zur Generierung eines Magnetfelds M verwendbar, insbesondere wenn dieses eine Element auf die erwartete Belastung ausgerichtet ist.

Auch sind die Vorrichtungen 3 zur Generierung der Magnetfelder M hier als Bereiche mit einem rechteckigen Querschnitt dargestellt. In anderen Ausführungsformen können auch andere Querschnittsformen, wie z.B. runde Formen, verwendet werden.

In der Fig. 1A ist eine Alternative zu der Ausführungsform gemäß Fig. 1 dargestellt. Dabei weist die Gleitlagervorrichtung 10 ein bewegliches Element auf, nämlich die Gleitlagerschale. In dem Gleitlager ist dann die Welle 2 als statisches Element angeordnet. Im Ergebnis sind Welle 2 und Gleitlager 1 relativ zueinander beweglich.

In Abwandlung von der Ausführungsform der Fig. 1 sind bei der Ausführungsform der Fig. 1A die Vorrichtungen 3 zur Generierung der Magnetfelder M außen in der Gleitlagerschale 10 angeordnet. Die Sensorvorrichtungen 11 sind am Umfang der Welle 2 angeordnet.

Die Funktionsweise dieser Ausführungsform entspricht ansonsten der Ausführungsform gemäß Fig. 1, so dass auf die entsprechende Beschreibung zurückgegriffen werden kann. In Fig. 1A wurde aus Gründen der Übersichtlichkeit die Erfassung der Spannungssignale U(t) weglassen. Diese erfolgt analog zu der Ausführungsform gemäß Fig. 1 mittels der Sensorvorrichtungen 11 am statischen Element, hier der Welle 2.

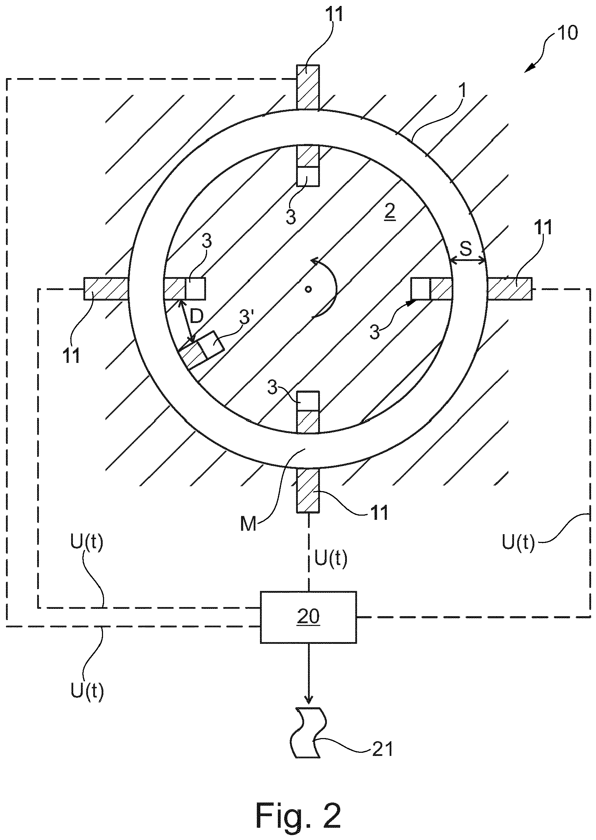

In einer anderen Ausführungsform wird die symmetrische Anordnung der Vorrichtungen 3 zur Erzeugung der Magnetfelder M jedoch gezielt gebrochen. In Fig. 2 ist eine solche Ausführungsform in Variation der Ausführungsform gemäß Fig. 1 dargestellt. Die grundsätzliche Funktionsweise entspricht der Ausführungsform gemäß Fig. 1, so dass auf die entsprechende Beschreibung Bezug genommen werden kann.

Hier ist eine zusätzliche Vorrichtung 3' zur Erzeugung eines Magnetfeldes M in einem Abstand D von einer der symmetrisch angeordneten Vorrichtungen 3 vorgesehen. Somit werden die Sensorvorrichtungen 11 ein etwas anders gebildetes Spannungssignal U(t) empfangen; es liegt eine über die zeitlichen Abstände der Spannungssignale kodierte Anordnung vor. Das induzierte Spannungssignal U(t) wird periodisch sein. Auf Grund der Asymmetrie kann bei einer solchen Anordnung auch eine Aussage über die Drehrichtung gewonnen werden, die zusammen mit den Aussagen über die räumliche Anordnung der Elemente 1, 2 Aussagen über den Betriebszustand erlaubt.

Auch die Ausführungsform gemäß Fig. 2 kann alternativ so wie die Ausführungsform gemäß Fig. 1A ausgeführt werden. Die asymmetrische Kodierung wäre dann auf dem beweglichen Element 2 der Gleitlagerschale angeordnet. Die Welle 2 mit den Sensorvorrichtungen 11 wäre dann das statische Element.

Bei den Ausführungsformen gemäß der Fig. 1, 1A und 2 sind die Vorrichtungen 3, 3' zur Erzeugung der Magnetfelder M jeweils in einer Ebene angeordnet.

In der Fig. 3 ist eine Welle 2 perspektivisch dargestellt, die in einem dort nicht dargestellten Gleitlager 1 als statisches Element gelagert ist. Die Grenzen des Gleitlagers sind in Fig. 3 als gestrichelte Linien angedeutet.

Hier sind am Umfang zwei Gruppen G1, G2 von Vorrichtungen 3 zur Generierung von Magnetfeldern M an unterschiedlichen axialen Positionen der Welle 2 angeordnet. Damit sind die Vorrichtungen 3 zur Generierung der Magnetfelder M mindestens teilweise über die Breite der mindestens einen Gleitlagervorrichtung 10 angeordnet.

Die einzelnen Elemente in der ersten Gruppe G1 sind dabei symmetrisch äquidistant am Umfang angeordnet (d.h. so wie in Fig. 1 dargestellt). Die einzelnen Elemente in der zweiten Gruppe G2 hingegen sind hingegen asymmetrisch angeordnet (so wie in Fig. 2), d.h. es liegt eine Kodierung über die zeitlichen Abstände vor. Grundsätzlich könnte die zweite Gruppe G2 auch identisch zur ersten Gruppe G1 ausgebildet sein.

Die hier nicht dargestellten Sensorvorrichtungen 11 erfassen somit Spannungssignale U(t), die an zwei unterschiedlichen axialen Positionen der Welle 2 erzeugt werden. Wenn die Welle 2 eine axiale Fehlstellung (z.B. eine Verkantung) aufweist, so werden die Gruppen G1, G2 unterschiedliche Spannungen U(t) induzieren. Dies zeigt an, dass z.B. das Spaltmaß S an der Position der ersten Gruppe G1 anders ausgebildet ist, als das Spaltmaß S an der zweiten Gruppe G2. All dies erlaubt eine Bestimmung der axialen Ausrichtung der Welle 2 in der Gleitlagervorrichtung 10. So kann z.B. die Schiefstellung der Welle 2 erkannt werden.

Grundsätzlich ist es auch möglich, mehr als zwei Gruppen G1, G2 von Vorrichtungen 3 zur Generierung von Magnetfeldern M zu verwenden. Auch können lineare Strukturen verwendet werden, die sich über einen größeren axialen Bereich der Welle 2 erstrecken.

Allen bisher dargestellten Ausführungsformen ist gemeinsam, dass das induzierte Spannungssignal U(t) berührungslos gewonnen wurde.

Die berührungslose Ermittlung von induzierten Spannungssignalen U(t) zur Ermittlung der räumlichen Anordnung eines beweglichen Teils 2 relativ zu einem statischen Teil 1 kann z.B. in Zusammenhang mit einer Getriebevorrichtung verwendet werden.

Eine sogenannte Power-Gearbox in einem Flugzeugtriebwerk ist eine als Planetengetriebe 30 ausgebildete Umlaufgetriebevorrichtung mit mehreren Gleitlagervorrichtungen 10. Die Power-Gearbox verbindet als Untersetzungsgetriebe den Fan des Flugzeugtriebwerks mit einer Welle (z.B. einer Niederdruckwelle).

Dies wird auch als Geared Turbofan bezeichnet. Dabei kann der Fan bei einer niedrigeren Drehzahl betrieben werden als die antreibende Welle. Dadurch können die Drehzahlen der entsprechenden Verdichterstufen und Turbinenstufen deutlich erhöht werden, was zur Erhöhung des Gesamtdruckverhältnisses; damit zu einer verbesserten Effizienz führt.

In Fig. 4 ist in einer axialen Ansicht ein Planetengetriebe 30 schematisch dargestellt, das in einem Geared Turbofan Flugzeugtriebwerk verwendbar ist. Ein Gehäuse des Planetengetriebes 30 weist ein Hohlrad 33 auf, das statisch ist, wobei fünf Planetenräder 31 in diesem Hohlrad 33 umlaufend abrollen. Die Planetenräder 31 sind drehbar auf Wellen 35 gelagert. Untereinander sind die Planetenräder 31 durch einen starren Planetenträger (Carrier) 32 miteinander verbunden.

In der dargestellten Ausführungsform ist ein Sonnenrad 34 des Planetengetriebes 30 antreibbar. Diese Drehbewegung wird dann über die Planetenräder 31 auf den Carrier 32 übertragen, über den letztlich der Abtrieb aus dem Planetengetriebe 30 erfolgt.

Ausführungsformen der Vorrichtung zur Überwachung einer Vorrichtung (hier des Planetengetriebes 30) mit mindestens einer Gleitlagervorrichtung 10 können hier in unterschiedlicher Weise angewandt werden.

In Fig. 4 ist eine Ausführungsform dargestellt, bei der an den Stirnseiten der drehbaren Planetenräder 31, die durch Gleitlagervorrichtungen 10 auf den Wellen 35 gelagert sind, vier Vorrichtungen 3 zur Erzeugung eines magnetischen Feldes M angeordnet sind. Aus Gründen der Übersichtlichkeit sind diese in Fig. 4 nur an einem der Planetenräder 31 dargestellt. Somit geht es hier nicht um die Bestimmung eines Spaltmaßes S, sondern um die Bestimmung einer räumlichen Anordnung der Planetenräder 31.

Der Carrier 32 ist relativ zu den Planetenrädern 31 statisch, so dass eine Sensorvorrichtung 11 an dem Carrier 32 hier die Magnetfelder M erfassen kann, d.h., es wird z.B. in einer Spule der Sensorvorrichtung 11 eine Spannung U(t) induziert, die dann - wie oben beschrieben - zu einer Datenverarbeitungsvorrichtung 20 geleitet werden kann. Damit kann die räumliche Anordnung und die Lagerung jedes der Planetenräder 31 (einschließlich der Planetenkonstellation) relativ zum Carrier 32 überwacht werden. Wenn die Planetenräder 31 jeweils eine individuelle Kodierung aufweisen (analog zu der Ausführungsform gemäß Fig. 3), kann die Datenverarbeitungsvorrichtung 20 an unterschiedlichen Messergebnissen in dem Spannungssignal U(t) das Rotationsverhalten der Planetenräder - und damit die räumliche Anordnung - ermitteln. Dabei sind die Signale der Planetenräder 31 und die Signale betreffend die axiale Ausrichtung unterschiedlich.

Der Carrier 32 kann axial auf beiden Seiten der Planetenräder 31 angeordnet sein, so dass auch Sensorvorrichtungen 11 auf beiden Seiten angeordnet sein können. Wenn nun die Planetenräder 31 auf beiden Stirnseiten Vorrichtungen 3 zur Generierung eines Magnetfeldes M aufweisen, können die Sensorvorrichtungen 11 Messungen vornehmen, die Aussagen zur räumlichen Anordnung, insbesondere der Orientierung der Planetenräder 31 erlauben.

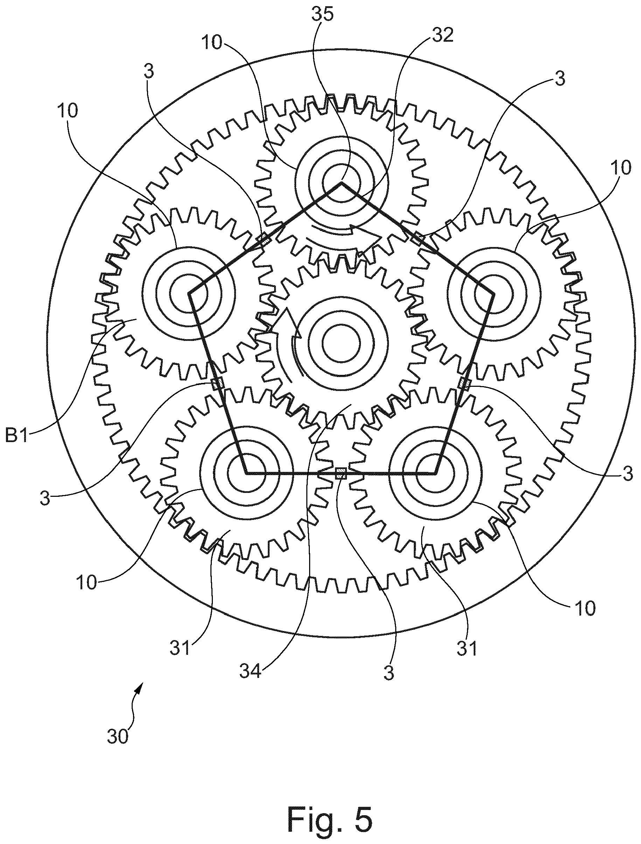

Zusätzlich ist es in einer weiteren Ausführungsform (siehe Fig. 5) noch möglich, die Bewegung des Carriers 32 relativ zum Gehäuse mit dem Hohlrad 33 zu erfassen, wobei grundsätzlich das gleiche Wirkprinzip verwendet wird. In Fig. 5 ist die gleiche Konfiguration wie in Fig. 4 dargestellt, so dass Bezug auf die entsprechende Beschreibung genommen werden kann. Die Einzelheiten der Erfassung der Bewegung der Planetenräder 31 (siehe Fig. 4) ist hier aus Gründen der Einfachheit nicht dargestellt.

Der Carrier 32 ist ein bewegliches Element relativ zu dem statischen Hohlrad 33 im Gehäuse des Planetengetriebes 30. Demnach sind an dem Carrier 32 Vorrichtungen 3 zur Generierung von Magnetfeldern M angeordnet. In der dargestellten Ausführungsform sind fünf solche Vorrichtungen 3 vorgesehen.

Im Gehäuse (in Fig. 5 nicht dargestellt) des Planetengetriebes 30 sind dann entsprechend Sensorvorrichtungen 11 angeordnet, die die magnetischen Felder M erfassen, so dass die Drehbewegung des Carriers 31 relativ zum Gehäuse berührungslos von außerhalb des Gehäuses erfasst werden kann.

Somit können durch Erfassung der Magnetfelder M Informationen aus dem abgeschlossenen Getriebegehäuse des Planetengetriebes 30 gewonnen werden, ohne dass elektrische Signale übertragen werden müssen. Da in Flugzeugtriebwerken immer auch brennbare Materialien vorhanden sind, stellt die Reduktion von elektrischen Signalen eine Verbesserung dar.

Die Signalübertragung aus dem Inneren des Gehäuses kann sogar noch in anderer Weise verwirklicht werden.

In der Ausführungsform gemäß Fig. 4 wurden die aktuellen räumlichen Anordnungen der Bewegungen der Planetenräder 31 um die jeweiligen Wellen 35 erfasst, indem die Änderungen der magnetischen Felder M erfasst wurden.

In der zusätzlichen Ausführungsform gemäß Fig. 5 wurden die aktuellen räumlichen Anordnungen der Bewegung des Carriers 32 relativ zum Gehäuse des Planetengetriebes 30 erfasst, indem wiederum Änderungen der magnetischen Felder M erfasst wurden.

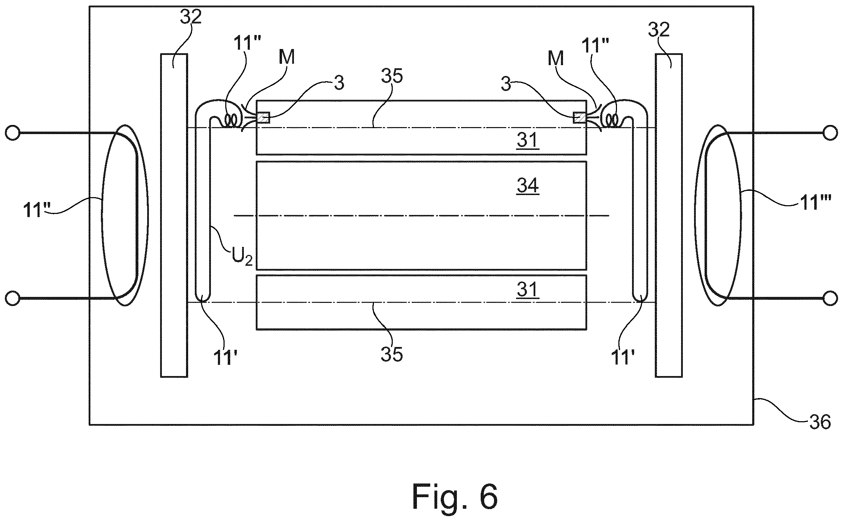

Nun ist es möglich, eine Signalgenerierung mit einer Signalübertragung zu kombinieren, die in der Fig. 6 dargestellt ist. Hier werden zwei Spulen in "Reihe" geschaltet.

Wenn z.B. die Spulen der Sensorvorrichtung 11 am Carrier 32 (siehe Fig. 4) mit der Vorrichtung 3 zur Erzeugung magnetischer Felder M (siehe Fig. 5) magnetisch gekoppelt werden, so kann ein einziges magnetisches Signal erzeugt werden, das ein Spannungssignal U(t) induziert und das dann an der Außenseite des Gehäuses des Planetengetriebes 30 detektierbar ist.

Da die Dynamik der Planetenräder 31 sich erheblich von der Dynamik des Carriers 32 unterscheidet, können die Informationen zu den beiden Untersystemen aus dem modulierten Gesamtsignal durch eine Fourier-Analyse extrahiert werden.

Grundsätzlich sind auch andere Bewegungsmuster bei einem Planetengetriebe 30 möglich, bei denen die hier dargestellten Ausführungsformen anwendbar sind.

So können jeweils der Carrier 32, das Sonnenrad 34 oder das Hohlrad 33 angetrieben werden. Der Abtrieb erfolgt dann über ein anderes dieser Elemente, während das verbliebene dritte Element dann statisch ist. So kann z.B. das Hohlrad 33 angetrieben werden, was die Planetenräder 31 in Drehung versetzt, so dass schließlich ein Abtrieb über das Sonnenrad 34 bei fixiertem Carrier 32 erfolgen kann.

In Fig. 6 ist in einer schematischen Seitenansicht ein Planetengetriebe 30 mit zwei Planetenrädern 31 und einem Sonnenrad 34 dargestellt. Die Planetenräder 31 sind auf Wellen 35 mittels Gleitlagervorrichtungen 10 gelagert. Das Planetengetriebe 30 ist in einem Gehäuse 36 angeordnet, das in Fig. 6 nur schematisch dargestellt ist, da insbesondere die Welleneingänge und -ausgänge fehlen.

Die Planetenräder 31 sind im Carrier 32 angeordnet, der die Planetenräder 31 axial an den Enden umgibt.

In dieser Konfiguration ist es grundsätzlich möglich, die Spaltmaße S der Planetenräder 31 auf den Gleitlagern 10 zu ermitteln, wie dies im Zusammenhang mit den Fig. 1 bis 3 dargestellt wurde.

Zusätzlich und alternativ können auch die räumlichen Anordnungen, insbesondere die Orientierungen der Planetenräder 31 innerhalb des Gehäuses des Planetengetriebes 30 gemäß der Ausführungsformen aus Fig. 4 und / oder Fig. 5 erfasst werden.

In Fig. 6 wird nun eine weitere Ausführungsform dargestellt, die alternativ oder in Kombination mit den anderen Ausführungsformen eingesetzt werden kann.

Die Planetenräder 31 weisen dazu an beiden Enden Vorrichtungen 3 zur Generierung von Magnetfeldern M auf. Alternativ können die Vorrichtungen 3 zur Generierung von Magnetfeldern M auch auf den Wellen 35 angeordnet sein.

In Fig. 6 sind diese Vorrichtungen aus Gründen der Übersichtlichkeit nur an einem Planetenrad 31 dargestellt und es ist jeweils auch nur eine Vorrichtung 3 dargestellt. Die Vorrichtungen 3 drehen sich mit den Planetenrädern 31 um die Wellen 35 relativ zu dem Carrier 32. An dem Carrier 32 sind erste Spulen 11' als Teile einer Sensorvorrichtung 11 angeordnet. Die ersten Spulen 11' haben einen vergleichsweise großen Durchmesser, entsprechend dem Durchmesser des Carriers 32.

An den ersten Spulen 11' sind jeweils zweite Spule 11" so angeordnet, dass sie die Magnetfelder M der Vorrichtungen 3 zur Erzeugung der Magnetfelder M erfassen können. Durch die Relativbewegung zwischen den Vorrichtungen 3 zur Generierung der Magnetfelder M und der zweiten Spulen 11" zueinander wird in den zweiten Spulen 11" jeweils eine Spannung $U_2$ induziert (analog z.B. Fig. 1A). Diese Spannungen induzieren jeweils einen Stromfluss I in der ersten Spule 11'.

Die Spannungen werden durch die Änderung des magnetischen Flusses

$$U_1 = -\frac{d\,\Theta_1}{dt}$$

in der ersten Spule 11' erzeugt. Dadurch wird ein Strom erzeugt, der durch die erste Spule 11' und die zweiten Spule 11" fließt, was wiederum ein sich änderndes Magnetfeld in der zweiten Spule 11" erzeugt. Das erzeugt schließlich die Spannung $U_3$ in einer dritten Spule 11"':

$$U_3 = -\frac{d\,\Theta_2}{dt}$$

Am Gehäuse 36 sind dritte Spulen 11"' ortsfest als Teil der Sensorvorrichtung 11 angeordnet. Die zweiten Spulen 11" in dem Carrier 32 bewegen sich relativ zu den dritten Spulen 11"', so dass in diesen jeweils eine Spannung $U_3$ induziert wird.

Diese Spannungssignale $U_3$ können dann an eine hier nicht dargestellte Datenverarbeitungsvorrichtung 20 übermittelt werden.

Mit dieser Ausführungsform ist es möglich, durch drahtloses Mittel Aussagen über die räumliche Anordnung der Planetenräder 31 innerhalb des Gehäuses 36 des Planetengetriebes 30 zu erhalten.

Dabei können die Vorrichtungen 3 zur Generierung der Magnetfelder M so ausgebildet werden, dass die Planetenräder individualisierbar kodiert sind, wie dies z.B. im Zusammenhang mit der Fig. 2 dargestellt worden war. Die Vorrichtungen 3 zur Generierung der Magnetfelder M können in Form von individualisierbaren Mustern auf den Planetenrädern 31 angeordnet sein. Die Breite der magnetischen Bereiche kann z.B. der Größe des zu messenden Spaltmaßes entsprechen. Die magnetischen Bereiche können z.B. - analog zur einer magnetisierbaren Oberfläche in eine Festplatte - in Form eines magnetisierbaren Bereichs umgesetzt werden.

Bei der Relativbewegung der Planetenräder 31 zum Carrier 32 werden somit individuell unterschiedliche Spannungssignale erzeugt, die ein besonderes Signal in den zweiten Spulen 11" erzeugen. Die Datenverarbeitungsvorrichtung 20 kann dann die einzelnen Beiträge der Planetenräder 31 an diesem Signal analysieren.

In diesen Ausführungsformen wurden Planetengetriebe mit fünf Planetenrädern 31 verwendet. Alternativ können statt der fünf Planetenräder drei oder vier, oder auch mehr als fünf verwendet werden. Auch können diese Prinzipien auf andere Umlaufgetriebe, wie z.B. zusammengesetzte Umlaufgetriebe oder zusammengesetzte Planetengetriebe (d.h. zwei oder mehr äußere Anschlusswellen), übertragen werden.

Es ist auch möglich, eine Scheibe mit magnetischen Daten auf das bewegliche Element 1 des Lagers anzuordnen. Auf dem statischen Element 2 ist dann ein magnetischer Lesekopf angeordnet, der die Daten ausliest.

**Bezugszeichenliste**

| | |
|---|---|
| 1 | statisches Element, z.B. Gleitlager, Welle für Planetenrad, Carrier |
| 2 | bewegliches Element, z.B. Welle, Planetenrad, Carrier, Gleitlagerschale |
| 3, 3' | Vorrichtung zur Generierung eines Magnetfeldes |
| 10 | zu überwachende Vorrichtung, Gleitlagervorrichtung |
| 11 | Sensorvorrichtung |
| 11' | erste Spule |
| 11" | zweite Spule (an Carrier) |
| 11"' | dritte Spule (an Gehäuse) |
| 20 | Datenverarbeitungsvorrichtung |
| 21 | Datensatz |
| 30 | Planetengetriebe |
| 31 | Planetenrad |
| 32 | Carrier |

33    Hohlrad im Gehäuse des Planetengetriebes
34    Sonnenrad
35    Welle für Planetenrad
36    Gehäuse für Planetengetriebe

A     Fläche, die vom magnetischen Fluß durchdrungen wird
B     magnetische Flussdichte
D     Abstand zwischen zwei Vorrichtungen zur Generierung eines Magnetfeldes
G1    erste Gruppe von Vorrichtungen zur Generierung eines Magnetfeldes
G2    zweite Gruppe von Vorrichtungen zur Generierung eines Magnetfeldes
I(t)   Strom hervorgerufen durch induzierte Spannung
M     Magnetfeld
S     Spaltmaß
U(t)   induzierte Spannungssignale
Θ     magnetischer Fluß (B*A)


**Patentansprüche**

1.    Vorrichtung zur Überwachung einer Vorrichtung mit mindestens einer Gleitlagervorrichtung (10) mit mindestens einem statischen Element (1, 30, 32, 35) für mindestens ein relativ zum mindestens einen statischen Element (1, 30, 32, 35) rotatorisch beweglichen Element (2, 31, 32),
      **dadurch gekennzeichnet, dass**
      das mindestens eine bewegliche Element (2, 31, 32) mindestens eine Vorrichtung (3) zur Generierung eines Magnetfeldes (M) aufweist und das mindestens eine statische Element (1, 30, 32, 35) mindestens eine Sensorvorrichtung (11) für die Erfassung des Magnetfeldes (M), insbesondere eines zeitlich veränderlichen Magnetfeldes (M), aufweist, wobei von der Sensorvorrichtung (11) insbesondere berührungslos erfasste Daten des Magnetfelds (M) im Betrieb der mindestens einen Vorrichtung an eine Datenverarbeitungsvorrichtung (20) übertragbar sind und mit der Datenverarbeitungsvorrichtung (20) in Abhängigkeit der erfassten Daten mindestens eine Maßzahl für eine räumliche Anordnung des mindestens einen statischen Elements (1, 30, 32, 35) relativ zu dem mindestens einen beweglichen Element (2, 31, 32) bestimmbar ist.

2.    Vorrichtung nach Anspruch 1, **dadurch gekennzeichnet, dass** die räumliche Anordnung zwischen dem mindestens einen statischen Element (1, 30, 32, 35) und dem mindestens einen beweglichen Element (2, 31, 32) durch
      ein Spaltmaß (S) zwischen dem mindestens einen statischen Element (1, 35) und dem mindestens einen beweglichen Element (2, 31),
      ein Maß für die Ausrichtung, insbesondere die axiale Ausrichtung, radiale Ausrichtung und / oder die Orientierung zwischen dem mindestens einen statischen Element (1, 30, 32, 35) und dem mindestens einen beweglichen Element (2, 31, 32),
      eine Phasenlage,
      eine Drehrichtung des mindestens einen beweglichen Elements (2, 31, 32) und / oder
      die Drehzahl des mindestens einen beweglichen Elements (2, 31, 32) charakterisiert ist.

3.    Vorrichtung nach Anspruch 1 oder 2, **dadurch gekennzeichnet, dass** die Vorrichtung (3) zur Generierung eines Magnetfeldes (M) mindestens ein Magnetelement (4) aufweist, insbesondere mindestens ein im mindestens einen beweglichen Element (2, 31, 32) eingelagertes Magnetelement, einen in den beweglichen Element (2, 31, 32) extern eingebrachten magnetisierten Bereich, mindestens eine im mindestens einen beweglichen Element (2, 31, 32) eingelagerte Spule und / oder mindestens einen im mindestens einen beweglichen Element (2, 31, 32) eingelagerten Permanentmagneten oder magnetischen Bereich..

4.    Vorrichtung nach Anspruch 3, **dadurch gekennzeichnet, dass** die Vorrichtung (3') zur Generierung des Magnetfelds (M) zur Unterscheidung der Drehrichtung des mindestens einen beweglichen Elements (2, 31, 32) und / oder zur Individualisierung des beweglichen Elements (2, 31, 32) ein kodiertes Magnetelement aufweist, insbesondere eine Abfolge von Magneten oder eine Abfolge von magnetischen Bereichen aufweist.

5.    Vorrichtung nach mindestens einem der vorhergehenden Ansprüche, **dadurch gekennzeichnet, dass** die mindestens eine Vorrichtung (3) zur Generierung eines Magnetfeldes (M) mindestens teilweise über die Breite der mindestens einen Gleitlagervorrichtung (10) angeordnet ist.

6.    Vorrichtung nach mindestens einem der vorhergehenden Ansprüche, **dadurch gekennzeichnet, dass** die Sensorvorrichtung (11) mindestens eine Spule zur Erfassung des Magnetfeldes (M), insbesondere des zeitlich veränderlichen Magnetfeldes (M), mindestens einen Hallsensor, einen magnetischen Lesekopf und / oder mindestens einen magnetoresistiven Sensor aufweist.

7.    Vorrichtung nach mindestens einem der vorhergehenden Ansprüche, **dadurch gekennzeichnet, dass** mit der Datenverarbeitungsvorrichtung (20) der Amplitudenverlauf des zeitlich veränderlichen Magnetfeldes (M) bestimmbar ist.

8.    Vorrichtung nach mindestens einem der vorhergehenden Ansprüche, **dadurch gekennzeichnet, dass** das mindestens eine statische Element (1) ein Carrier (32) in einem Umlaufgetriebe, insbesondere einem Planetengetriebe (30), ist und die mindestens eine Sensorvorrichtung (11) an einem Carrier (32) des Umlaufgetriebes (30) angeordnet ist.

9. Vorrichtung nach Anspruch 8, **dadurch gekennzeichnet, dass** das mindestens eine bewegliche Element (2) an mindestens einem Planetenrad (31) des Umlaufgetriebes, insbesondere des Planetengetriebes (30), angeordnet ist, so dass eine Bewegung des mindestens einen Planetenrades (31) relativ zum Carrier (32) durch die mindestens eine Sensorvorrichtung (11) am Carrier (32) erfassbar ist.

10. Vorrichtung nach mindestens einem der Ansprüche 1 bis 7, **dadurch gekennzeichnet, dass** das mindestens eine statische Element ein Gehäuse (36) des Umlaufgetriebes, insbesondere des Planetengetriebes (30), ist oder am Gehäuse (36) angeordnet ist und der Carrier (32) das relativ zum Gehäuse (36) bewegliche Element (2) ist, so dass eine Relativbewegung des Carriers (32) zum Gehäuse (36) durch die mindestens eine Sensorvorrichtung (11) erfassbar ist.

11. Turbomaschine, insbesondere ein Flugzeugtriebwerk, mit mindestens einer Vorrichtung nach mindestens einem der Ansprüche 1 bis 10.

12. Verfahren zur Überwachung mindestens einer Vorrichtung mit mindestens einer Gleitlagervorrichtung (10) mit mindestens einem statischen Element (1, 30, 32, 35) für mindestens ein relativ zum mindestens einen statischen Element (1, 30, 32, 35) rotatorisch beweglichen Element (2, 31, 32),
**dadurch gekennzeichnet, dass**

a) das mindestens eine bewegliche Element (2, 31, 32) ein Magnetfeld (M) mittels mindestens einer Vorrichtung (3) generiert,
b) das mindestens eine statische Element (1, 30, 32, 35) mindestens eine Sensorvorrichtung (11) aufweist, die das Magnetfeld (M), insbesondere das zeitlich veränderliche Magnetfeld (M), erfasst, (M), wobei
c) von der mindestens einen Sensorvorrichtung (11), insbesondere berührungslos erfasste Daten des Magnetfelds (M) der Vorrichtung (10) an eine Datenverarbeitungsvorrichtung (20) übertragen werden und
d) die Datenverarbeitungsvorrichtung (20) in Abhängigkeit der erfassten Daten mindestens eine Maßzahl für eine räumliche Anordnung des mindestens einen statischen Elements (1, 30, 32, 35) relativ zu dem mindestens einen beweglichen Element (2, 31, 32) bestimmt.

Fig. 1

Fig. 1A

Fig. 1B

Fig. 2

Fig. 3

EP 3 447 318 A1

Fig. 4

Fig. 5

EP 3 447 318 A1

Fig. 6

**Europäisches Patentamt**
**European Patent Office**
**Office européen des brevets**

# EUROPÄISCHER RECHERCHENBERICHT

Nummer der Anmeldung

EP 18 18 7527

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP H05 302619 A (NIKKISO CO LTD) 16. November 1993 (1993-11-16) | 1-3,5,7, 12 | INV. F16C17/24 |
| Y | * Abbildung 2 * | 8-11 | G01P3/44 |
| | * Absätze [0010], [0012], [0016] * | | G01M13/02 |
| | ----- | | G01M13/04 |
| X | US 5 198 763 A (KONISHI YOSHIAKI [JP]) 30. März 1993 (1993-03-30) | 1-3,6,7, 12 | G01B7/14 G01D5/14 |
| Y | * Abbildungen 2a, 2b, 4b, 7a, 7b * | 8-11 | G01B7/30 |
| A | * Spalte 4, Zeile 37 - Zeile 40 * | 4 | |
| | * Spalte 4, Zeile 52 - Zeile 64 * | | |
| | * Spalte 5, Zeile 19 - Zeile 26 * | | |
| | ----- | | |
| X | US 2017/065945 A1 (HOEFKEN MARCUS [DE]) 9. März 2017 (2017-03-09) | 1-3,5,6, 12 | |
| Y | * Abbildungen 3, 5, 6 * | 8-11 | |
| | * Absätze [0008], [0032] * | | |
| | ----- | | |
| X | JP 2008 026081 A (TOYOTA MOTOR CORP) 7. Februar 2008 (2008-02-07) | 1-6,12 | |
| Y | * Abbildung 1 * | 8-11 | |
| | * Absätze [0001], [0020] * | | |
| | ----- | | |
| Y | EP 3 156 759 A1 (UNITED TECHNOLOGIES CORP [US]) 19. April 2017 (2017-04-19) * Abbildungen 4, 5 * * Absätze [0001], [0032], [0033], [0034] * | 8-11 | |
| | ----- | | |

**RECHERCHIERTE SACHGEBIETE (IPC)**

F16C
G01P
G01D
G01M
G01B

Der vorliegende Recherchenbericht wurde für alle Patentansprüche erstellt

| Recherchenort | Abschlußdatum der Recherche | Prüfer |
|---|---|---|
| Den Haag | 7. November 2018 | Frechard, Fabrice |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...................................................................................

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 18 18 7527

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-11-2018

| Im Recherchenbericht angeführtes Patentdokument | Datum der Veröffentlichung | Mitglied(er) der Patentfamilie | Datum der Veröffentlichung |
|---|---|---|---|
| JP H05302619 A | 16-11-1993 | KEINE | |
| US 5198763 A | 30-03-1993 | KEINE | |
| US 2017065945 A1 | 09-03-2017 | CA 2937614 A1 | 17-09-2015 |
| | | CN 106102891 A | 09-11-2016 |
| | | DE 102014204824 A1 | 17-09-2015 |
| | | EP 3116635 A1 | 18-01-2017 |
| | | JP 2017510456 A | 13-04-2017 |
| | | KR 20160135181 A | 25-11-2016 |
| | | TW 201534389 A | 16-09-2015 |
| | | US 2017065945 A1 | 09-03-2017 |
| | | WO 2015135783 A1 | 17-09-2015 |
| JP 2008026081 A | 07-02-2008 | KEINE | |
| EP 3156759 A1 | 19-04-2017 | EP 3156759 A1 | 19-04-2017 |
| | | US 2017102292 A1 | 13-04-2017 |

EPO FORM P0461

Für nähere Einzelheiten zu diesem Anhang : siehe Amtsblatt des Europäischen Patentamts, Nr.12/82